# EUROPEAN PATENT APPLICATION

(11) **EP 2 299 708 A2**
(43) Date of publication of application: **23.03.2011**
(21) Application number: 10175646.8
(22) Date of filing: 07.09.2010
(51) Int. Cl.: H04N 7/167

(54) **Encryption keys**

(30) Priority: 07.09.2009 GB 0915596
(71) Applicant: STMicroelectronics (Research & Development) Limited, Marlow, Buckinghamshire SL7 1YL (GB)
(72) Inventor: Smith, David, Marlow, Buckinghamshire SL7 1YL (GB); Lindsay, Andrew, Marlow, Buckinghamshire SL7 1YL (GB)
(74) Representative: Style, Kelda Camilla Karen

(57) **Abstract**

A system is provided comprising a key memory storing a group of keys for use in decryption. The system further comprises a programmable memory configured to store a set of rules governing access to the key memory and a first engine for deriving a first key using a second key from said key group. The engine is configured to transmit a request for access to the second key from the key memory. The system further comprises logic connected between the engine and the key memory and further connected to the programmable memory. The logic is configured to receive the request from the engine and to use the set of rules to control the access to the second key in the key memory. The programmable memory is writeable in situ to replace said set of rules with an alternative set of rules.

## Description

### Field of the Invention

This invention relates to accessing encryption keys for use in encrypting and decrypting data.

### Background

Digital television signals are generally encrypted before being broadcast to set top boxes to ensure that only authenticated set top boxes can view the content transmitted by the signals. A cryptographic encryption system can be used to encrypt the signals, whereby the signals are encrypted using keys which are known only to the signal provider (or conditional access vendor). The keys are provided to authorized set top boxes allowing them to decrypt signals that have been encrypted with the keys. This prevents unauthorized set top boxes, which do not have access to the correct keys, from decrypting the signals.

Different types of signals may be encrypted using different keys such that a plurality of keys are required at the set top box in order to decrypt the different types of signals. For example, control signals may be decrypted using a different key to that used to decrypt signals comprising audio or video content.

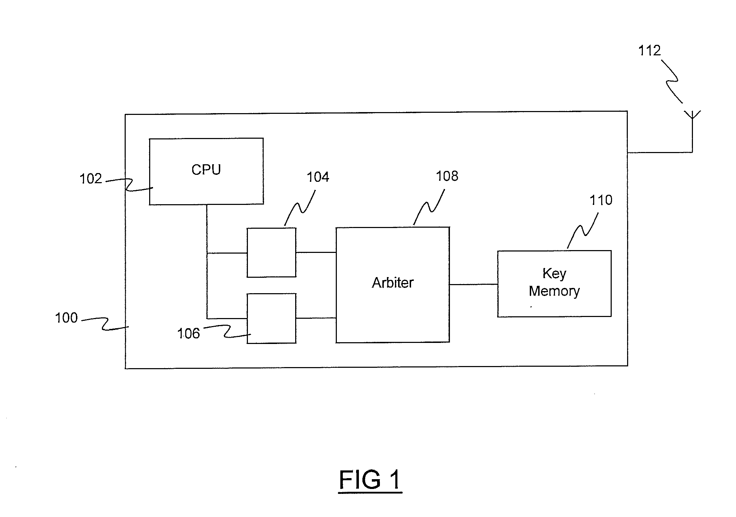

With reference to Figure 1 there is now described a set top box 100 of the prior art. The set top box 100 comprises a processor 102 which is connected to engines 104 and 106. Engines 104 and 106 are further connected to an arbiter 108. Arbiter 108 is further connected to a key memory 110. The set top box 100 is connected to a receiver 112 for receiving signals.

The key memory 110 stores the keys required by the set top box 100 in order to decrypt the encrypted signals received via 112 from the broadcaster. Under the control of the processor 102, the engines 104 and 106 receive the encrypted information. The engines 104 and 106 send requests for keys from the key memory 110 in order to decrypt the encrypted information. The arbiter 108 receives the requests from the engines 104 and 106 and manages the way in which the requests are sent to the key memory 110.

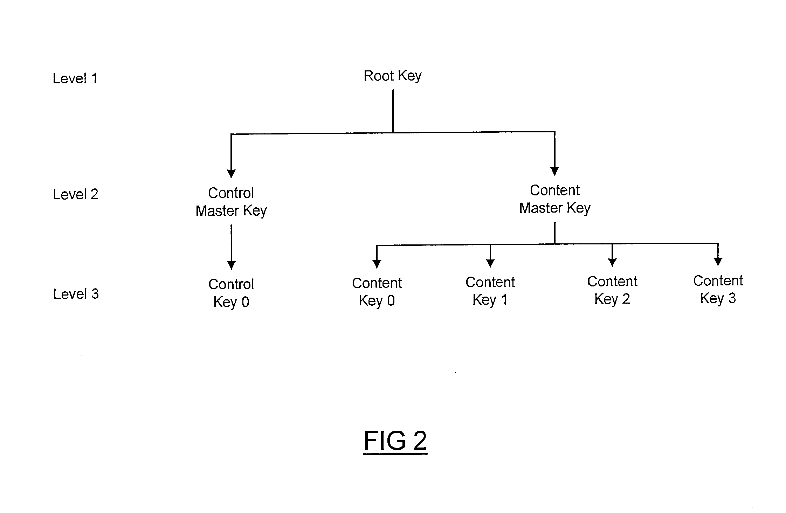

Not all of the keys in the key memory are used to decrypt content or control signals received via the receiver 112. Some of the keys may instead be used to decrypt other keys for storage in the key memory 110. The other keys can be received in encrypted form to protect the security of the system. The keys in the key memory are organised into a hierarchy, or a "ladder", such as that shown in Figure 2. In the ladder structure, a parent key can be used to decrypt keys that are its children. In the example key ladder shown in Figure 2, a Root Key is at the top of the ladder at Level 1. The Root Key can be used to decrypt the Control Master Key and the Content Master Key shown in Level 2. The Control Master Key can be used to decrypt Control Key 0 in Level 3. Similarly, the Content Master Key can be used to decrypt Content Key 0, Content Key 1, Content Key 2 and Content Key 3 in Level 3. The Root Key is stored in the set top box at manufacture and generally cannot be changed after manufacture. The system is secure because the Root Key is stored in such a way that it cannot be read out except for use as a key for decryption. From the Root Key, the other keys can be decrypted (either directly or indirectly in accordance with the ladder structure). However, other keys cannot be used to decrypt the Root Key. For example, the set top box 100 can receive the level 2 keys which are encrypted with the root key. The level 2 keys are essentially the same for every set top box and can be decrypted at the set top box 100 using the Root Key. This allows the level 3 keys to be encrypted with the level 2 keys (to which every authorised box has access) and transmitted to the set top box 100 in a broadcast signal. The set top box 100 can use the level 2 keys to decrypt the level 3 keys.

The Content Keys 0-3 are used to decrypt audio and voice signals received at the set top box 100, whilst the Control Key 0 is used to decrypt control signals received at the set top box 100. The Root Key, Control Master Key and Content Master Key are not used to decrypt data signals received at the set top box and are instead used to decrypt their children keys for storage in the key memory 110 according to the ladder structure shown in Figure 2. Although it is difficult to do so, a key that is used to decrypt received signals can be calculated based on observation of the inputs and outputs of a decrypting function using the key. This means that the security of such a key can be compromised. The security of a key increases as the number of steps in the ladder between the key and a key that is used to decrypt received signal increases. Different keys require different levels of security, so it is important to ensure that the ladder structure is followed. The ladder structure forms the basis of a set of rules as to how the keys in the key memory can be used. The set of rules may also state whether particular engines can access particular keys in the key memory 110. Other rules may also be included in the set of rules which govern how the keys in the key memory can be used.

The integrity of the set of rules must be maintained to ensure that the ladder structure is adhered to. In order to achieve this, the set of rules governing access to the key memory 110 is encoded in the set top box at manufacture.

The field of digital television transmission is rapidly developing such that increasing levels of security surrounding the keys is required. As signal providers increase the number of TV signals and as customers are increasingly willing to pay for access to the TV signals (particularly for premium services such as Sky Sports), it becomes even more important that the security of the keys is maintained. For that reason, the Root Key is stored in the set top box 100 at manufacture and is not used to decrypt data received via the receiver 112, and the set of rules are encoded in the set top box at manufacture. This ensures the security of the Root Key and the rules which are used to decrypt other keys.

The manufacturer of a set top box ensures that the set top box is manufactured to operate correctly with the signal provider. Other set top boxes can be manufactured with different root keys and ladder structures to operate correctly with signals transmitted by other signal providers. This means that the manufacturing process for the set top boxes needs to be altered in accordance with the specific signal provider with which the set top box will be used. It would be useful for the manufacturers to be able to manufacture a set top box that could be used with any signal provider whilst still maintaining stringent security of the keys in the set top box.

### Summary

According to a first aspect, there is provided a system comprising: a key memory storing a group of keys for use in decryption; a programmable memory configured to store a set of rules governing access to the key memory; a first engine for deriving a first key using a second key from said key group, the engine being configured to transmit a request for access to the second key from the key memory; and logic connected between the engine and the key memory and further connected to the programmable memory, the logic being configured to receive the request from the engine and to use the set of rules to control the access to the second key in the key memory, wherein said programmable memory is writeable in situ to replace said set of rules with an alternative set of rules.

The system may further comprise: a second engine for receiving encrypted information and for decrypting the encrypted information using a third key from said group, the engine being configured to transmit a request for access to the third key from the key memory, the logic being further configured to receive the request from the engine and to use the set of rules to control the access to the third key in the key memory,

The system may further comprise: a third engine for receiving unencrypted information and for encrypting the unencrypted information using a fourth key from said group, the engine being configured to transmit a request for access to the fourth key from the key memory, the logic being further configured to receive the request from the engine and to use the set of rules to control the access to the fourth key in the key memory,

The system of claim 2 wherein at least one of: the first and second engines are a single engine; the first and second engines are a single engine;the first and third engines are a single engine;the second and third engines are a single engine; and the first, second and third engines are a single engine.

According to a second aspect, there is provided a method for decrypting information comprising writing a set of rules into a programmable memory, the set of rules governing access to a key memory; deriving a first key at a first engine using a second key from said key group; transmitting a request from the first engine for access to the second key from the key memory; receiving the request at logic connected between the engine and the key memory, the logic being further connected to the programmable memory; and using the set of rules at the logic to control the access to the second key in the key memory, wherein said programmable memory is writeable in situ to replace said set of rules with an alternative set of rules.

The method may further comprise: receiving encrypted information at a second engine and for decrypting the encrypted information using a third key from said group; transmitting a request by the second engine for access to the third key from the key memory; and receiving the request at logic and using the set of rules to control the access to the third key in the key memory,

The method may further comprise: receiving unencrypted information at a third engine and for encrypting the unencrypted information using a fourth key from said group; transmitting a request by the third engine for access to the fourth key from the key memory; and receiving the request at logic and using the set of rules to control the access to the fourth key in the key memory,

In a further aspect of the invention there is provided a system comprising: a key memory storing a group of keys for use in decryption; a programmable memory configured to store a set of rules governing access to the key memory; an engine for receiving encrypted information and for decrypting the encrypted information using a key from said group, the engine being configured to transmit a request for access to the key from the key memory; and logic connected between the engine and the key memory and further connected to the programmable memory, the logic being configured to receive the request from the engine and to use the set of rules to control the access to the key in the key memory, wherein said programmable memory is writeable in situ to replace said set of rules with an alternative set of rules.

The system may further comprise a connection to an external source for loading the alternative set of rules to the programmable memory using a secure loading technique.

The system may further comprising a Read Only Memory configured to store said alternative set of rules.

The system may be such that the key memory comprises a plurality of key memory sections, each key memory section being configured to store at least one key, and wherein the programmable memory comprises a respective plurality of rule memory sections, each rule memory section being configured to store rules pertaining to the at least one key stored in the respective key memory section.

The system may be such that a first rule memory section, corresponding to a first key memory section, comprises a plurality of rule memory locations corresponding to the respective plurality of key memory sections, each rule memory location being configured to store a rule governing the interaction between a first key of the first key memory section and a second key of the key memory section corresponding to the rule memory location.

The system may be such that the programmable memory is configured to store the set of rules in the form of a linked list such that a first rule memory section, corresponding to a first key memory section, is configured to store: a first indicator of a second key memory section; and a pointer to a further rule memory section, the further rule memory section being configured to store a further indicator of a further key memory section.

The system may be such that the engine is further configured to, where the encrypted information is an encrypted key, generate a decrypted key from the encrypted key and send the decrypted key to the logic for storage in the key memory.

The system may be such that the logic is further configured to use the set of rules to determine whether and where to store the decrypted key in the key memory.

In a further aspect of the invention there is provided a method for decrypting information comprising: writing a set of rules into a programmable memory, the set of rules governing access to a key memory; receiving encrypted information at an engine, the engine being for decrypting the encrypted information using a key from a group of keys stored in the key memory; transmitting a request from the engine for access to the key from the key memory; receiving the request at logic connected between the engine and the key memory, the logic being further connected to the programmable memory; and using the set of rules at the logic to control the access to the key in the key memory, wherein said programmable memory is writeable in situ to replace said set of rules with an alternative set of rules.

The method may be such that the step of using the set of rules to control access to the key comprises using the set of rules to determine whether to grant access to the key in the key memory in dependence upon the encrypted information and the level of the key in a key hierarchy.

The method may be such that the encrypted information is an encrypted key and the determination of whether to grant access to the key further depends upon the level of the encrypted key in the key hierarchy.

The method may further comprise storing a root key at the top of the key hierarchy, wherein the set of rules dictate that the root key can be used for decrypting other keys but cannot be used for decrypting data.

The method may be such that the encrypted information is encrypted data and the method further comprises using a data key to decrypt the encrypted data, wherein the data key is at a lower level in the key hierarchy than the root key.

The method may further comprise updating at least one key in the key memory after a time interval which is shorter than an expected time required to calculate the at least one key based on observation of inputs and outputs of a decrypting function that uses the at least one key.

Embodiments of the present invention allow a rules RAM to be used to store rules governing how the keys in the key memory are used. Using the Rules RAM allows the rules to be changed after manufacture. This means that the set top box can be adapted for use with different signal providers using different key ladders. It also allows a signal provider to modify the structure of the key ladder after manufacture. This allows the security of the keys to be modified and/or improved in the set top box after manufacture without the need for replacing the whole set top box or the rule enforcer in the set top box. A new set of rules can be loaded into the rules RAM using a secure loading technique in order to alter the key ladder used by the rule enforcer. The secure loading technique ensures the authenticity of the rules loaded into the rules RAM. This maintains the security of the rules whilst allowing the rules to be flexible, such that the rules can be modified in the rules RAM in situ, subsequent to manufacture.

### Brief Description of the Drawings

For a better understanding of the present invention and to show how the same may be put into effect, reference will now be made, by way of example, to the following drawings in which:
Figure 1 is a schematic diagram of a first set top box of the prior art;
Figure 2 is a representation of a key ladder;
Figure 3 is a schematic diagram of a second set top box of the prior art;
Figure 4 is a schematic diagram of a set top box according to a preferred embodiment;
Figure 5 shows a flowchart of a process for accessing a key in the key memory;
Figure 6 shows the structure of the rules RAM in one embodiment;
Figure 7 shows the structure of the rules RAM in another embodiment;
Figure 8 shows a key ladder given by the structure of the rules RAM shown in Figure 7; and
Figure 9 shows a flowchart for a process of decrypting a new key using a key already stored in the key memory.

### Detailed Description of Preferred Embodiments

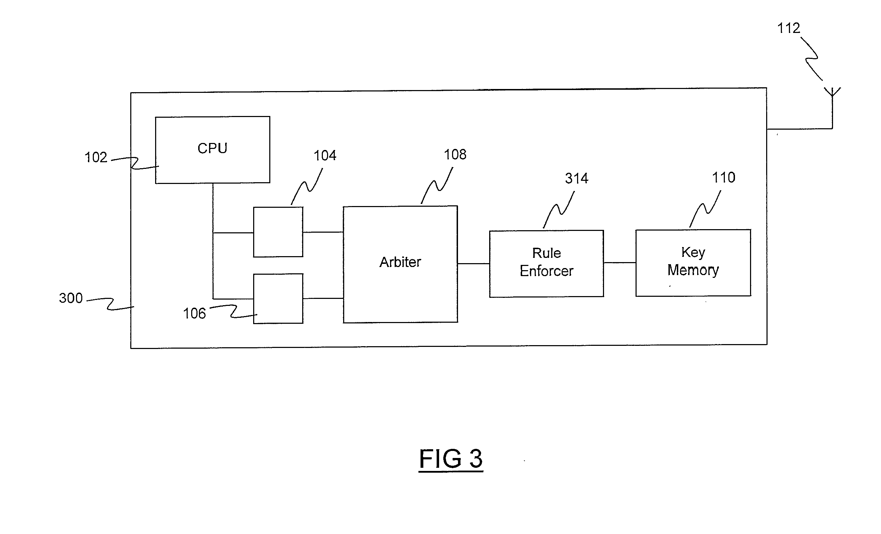

With reference to Figure 3 there is described a set top box 300 which comprises the components of set top box 100 with the addition of a rule enforcer 314 connected between the arbiter 108 and the key memory 110. The set of rules governing access to the key memory 110 is encoded in logic in the rule enforcer 314 at manufacture to ensure the security of the rules. Set top box 300 has the disadvantage that the rules in the rule enforcer 314 cannot be altered after manufacture.

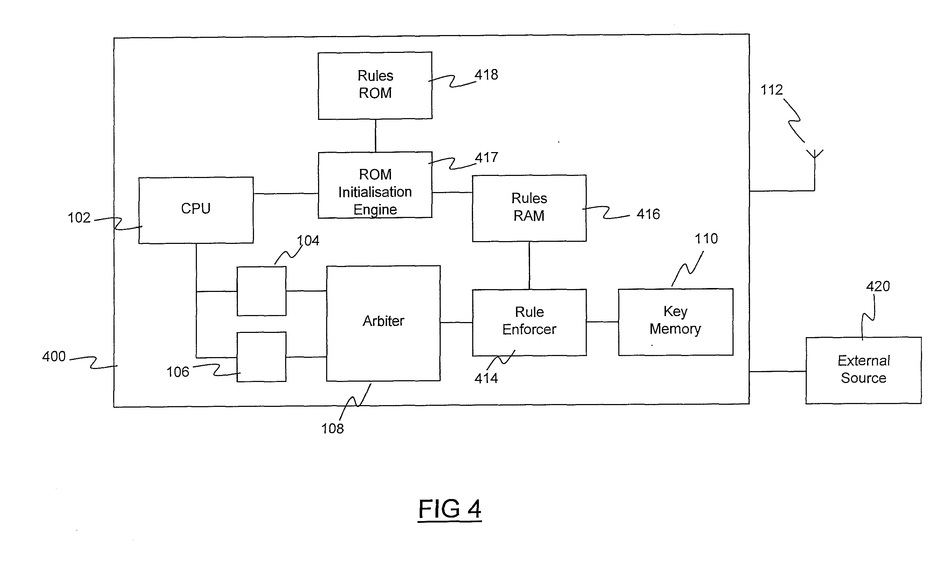

With reference to Figure 4 there is now described a set top box 400 according to a preferred embodiment. The set top box 400 comprises a processor 102, engines 104 and 106, an arbiter 108 and a key memory 110 and is connected to receiver 112 as described above in relation to set top box 100 of Figure 1. The set top box 400 also comprises a rule enforcer 414 connected between the arbiter 108 and the key memory 110. The rule enforcer 414 is also connected to a rules RAM 416 which stores rules governing access to the keys in the key memory 110. A ROM Initialisation engine 417 is connected to the processor 102 and the rules RAM 416. A rules ROM 418 is connected to the ROM initialisation engine 417 and an external memory 420 is connected to the set top box 400. In alternative embodiments, one or both of the rules ROM 418 and the external source 420 are not present.

Different keys stored in the key memory 110 are used for different decryption operations. For example, the keys shown in the key ladder of Figure 2 may be stored in the key memory 110 whereby only the keys in Level 3 are used for decrypting data received via receiver 112. The keys in Levels 1 and 2 are used for decrypting keys at lower levels for storage in the key memory 110. The set top box 400 could be manufactured to store all of the necessary keys internally, with the keys being chosen at the design or at the manufacture of the set top box. However, some of the encryption algorithms used in the encryption of the signals are not totally secure, such that with a reasonable amount of effort, the keys used in an encryption algorithm may be compromised. In other words, it may be possible to calculate a key based on observation of the inputs and the outputs of an encryption algorithm using the key. If this calculation is achieved then the security of the key is compromised. As an example, some algorithms may use a Data Encryption Standard (DES) key which is usually 56 bits long. Although, a DES key was considered very secure at the time of its release in the mid 1970s, advancement in computer technology has assisted in the development of techniques to compromise a DES key in time periods of the order of days. The keys in the key memory 110 can be updated after a time interval which is shorter than the expected amount of time required for the key to be compromised based on the observation of the inputs and outputs of a decrypting function. By changing the keys in this way at frequent intervals (e.g. every few minutes) the integrity and security of the keys can be maintained.

A mechanism is therefore required by which the set top box 400 can update the keys stored in the key memory 110 in a secure manner. This is achieved using a key ladder such as that shown in Figure 2. The Root Key is securely stored in the set top box 400 at manufacture and preferably cannot be modified after manufacture. The Root Key is not used to decrypt control or data information directly, which helps to ensure the security of the Root Key. The set top box 400 ultimately trusts the security of the Root Key. In other words the Root Key is a source of trust for the set top box 400. The Root Key is the basis from which other keys can be decrypted for storage in the key memory 110. In the key ladder shown in Figure 2, the Root Key is used to decrypt the Content Master Key and the Control Master Key.

The set top box 400 may receive a key in encrypted form from, for example, an external source 420. Alternatively, an encrypted key may be transmitted from the signal provider in the broadcast stream and received at the receiver 112 of the set top box 400. The Root Key may be used to decrypt the encrypted keys (which are "sub keys", i.e. at lower levels in the key ladder). The sub keys can then be stored in the key memory 110 in accordance with the rules stored in the rules RAM 416 as described below. The sub keys may then be used for decrypting audio or video content received via the receiver 112 or for decrypting further keys in dependence on the rules of the key ladder.

The keys used to decrypt the content or control signals received at the receiver 112 may be compromised after a certain time period as described above. The more steps in the key ladder that there are between a first key and a key which is used to decrypt received content or control signals, the more secure the first key is considered to be. In the key ladder shown in Figure 2, the Root Key is two steps above the Keys in level 3 and so the security of the Root Key is maintained at a high level.

Figure 4 shows two engines 104 and 106, but in other embodiments, other numbers of engines may be used. The engines perform encryption and decryption algorithms. The rule enforcer 414 monitors requests sent from engines 104 and 106 for access to keys in the key memory 110 and ensures that the engines 104 and 106 adhere to the rules in the rules RAM 416. The rules may for example state whether a particular algorithm is allowed access to a particular key, or whether a particular key can be used to decrypt another key. Other rules may also be included in the rules RAM 416, as described further below.

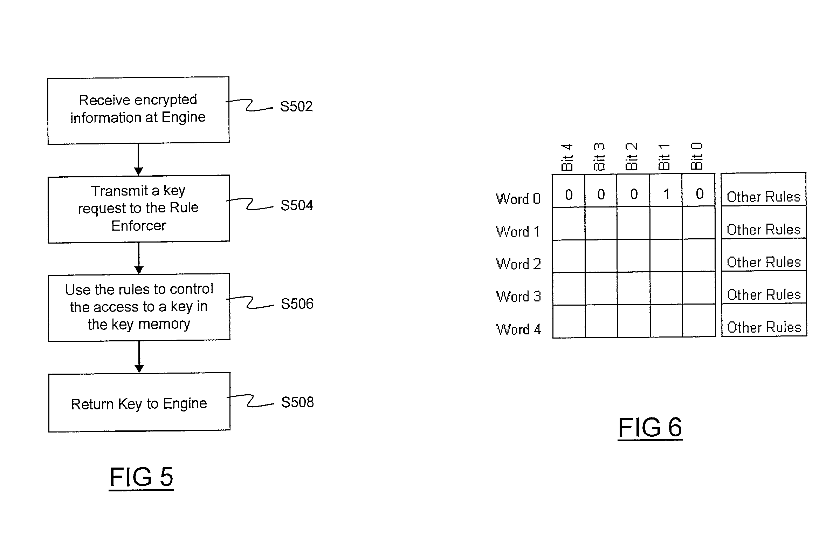

With reference to Figure 5 there is now described a method for decrypting information according to a preferred embodiment. In step S502 the encrypted information is received at engine 104. The encrypted information may be encrypted audio or video data or encrypted control data received at the set top box 400 via the receiver 112. The encrypted information may be received at the engine 104 from the processor 102. Alternatively, the encrypted information may be received at the engine 104 directly from another element, such as the receiver 112.

In step S504 the engine 104 sends a request to the rule enforcer 414 for access to a key in the key memory for use in decrypting the encrypted information. In step S506 the rule enforcer 414 uses the rules stored in the rules RAM 416 to determine whether the engine 104 should be granted access to the requested key in the key memory 110. If access to the requested key is granted then in step S508, the requested key is returned to the engine 104 for use in decrypting the encrypted information. If access to the requested key is not in accordance with the rules stored in the rules RAM 416 then access to the requested key in the key memory 110 is not granted and the requested key is not returned to the engine 104. The rule enforcer 414 may inform the engine 104 that access has not been granted to the requested key. In this way the rule enforcer 414 ensures that the rules in the rules RAM 416 are complied with.

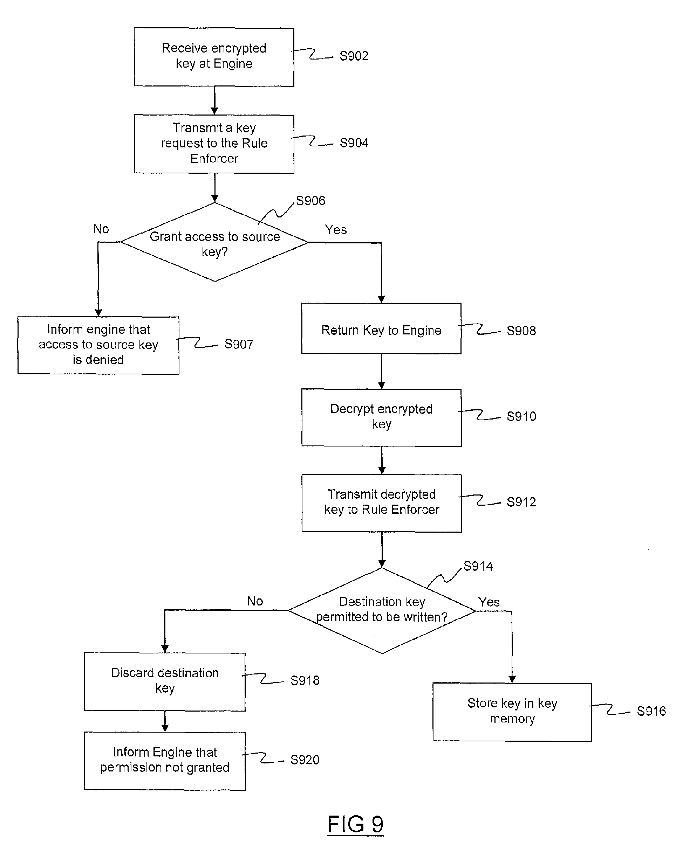

With reference to Figure 9 there is now described a method for decrypting keys according to a preferred embodiment. In step S902 an encrypted key is received at engine 104. The encrypted key may be received via the receiver 112 from the signal provider, or may be received from the external source 420.

In step S904 the engine 104 sends a request to the rule enforcer 414 for access to a key in the key memory 110 for use in decrypting the encrypted key. The location in the key memory 110 from which the key is requested is referred to herein as the "source location", and the key which is requested is referred to herein as the "source key".

In step S906 the rule enforcer 414 uses the rules stored in the rules RAM 416 to determine whether the engine 104 should be granted access to the source key in the key memory 110.

If access to the source key is granted then in step S908, the source key is returned to the engine 104 for use in decrypting the encrypted key. If access to the source key is not in accordance with the rules stored in the rules RAM 416 then access to the source key in the key memory 110 is not granted, the source key is not returned to the engine 104 and in an optional step S907 the rule enforcer 414 informs the engine 104 that access has not been granted to the source key.

Additionally, in step 908, the rule enforcer 414 stores information about the source location, for future use. In preferred embodiments this information comprises the locations in the key memory 110 which are considered to be valid destination locations for a key decryption using keys from the source location. In other embodiments the information stored at the rule enforcer 414 comprises the address of the source location in the key memory 110.

In step 910 the engine 104 uses the source key returned by the rule enforcer 414 from the key memory 110 to decrypt the encrypted key.

The new key generated by decrypting the encrypted key using the source key is referred to herein as the "destination key".

In step 912 the engine 104 sends a request to the rule enforcer 414 to write the destination key to the key memory 110.

The location in the key memory 110 to which the engine 104 attempts to write the destination key is referred to herein as the "destination location".

In step S914 the rule enforcer 414 uses the rules stored in the rules RAM 416 to determine whether the engine 104 should be permitted to write the destination key into the key memory 110. The rule enforcer 414 must consider two sets of rules when deciding whether to permit the destination key to be written to the destination location in the key memory 110. Firstly, there is a set of rules which are related solely to the destination location - for example, whether the particular engine concerned is permitted to write keys into that location. Secondly, the rule enforcer 414 must consider whether the combination of source location and destination location are permitted - i.e. whether the decryption is a valid "step" of the ladder. To make this decision, the rule enforcer 414 uses the information previously stored about the source location.

If permission to write the destination key is granted then in step S916, the destination key is written to the destination location in the key memory 110. If the key write request is not in accordance with the rules stored in the rules RAM 416 then in step S918 permission to write the destination key to the key memory 110 is not granted and the destination key is discarded. In an optional step S920, following step S918, the rule enforcer 414 informs the engine 104 that permission has not been granted to write the destination key to the key memory 110.

In this way the rule enforcer 414 ensures that the rules in the rules RAM 416 are complied with.

By storing the rules in the rules RAM 416 rather than in logic of the rule enforcer 414, the rules can be updated subsequent to the manufacture of the set top box 400 in order to accommodate new rules that a signal provider may want to enforce, or to allow a different signal provider to install different rules into the set top box for use with their signals.

Rules are loaded into the rules RAM 416 using a secure code loading technique, such as a technique involving the use of digital signatures and public key encryption. The rules RAM 416 needs to be initialized to contain the rules. For example on a system reset the rules RAM 416 is initialized and the rules are loaded in to the rules RAM 416. As an example, the rules may be loaded into the rules RAM 416 from an external source trusted by the signal provider, such as external source 420 shown in Figure 4, using a secure loading technique, involving for example a signature check. The external source 420 is external to the chip on which the other set top box components shown in Figure 4 reside, and in this sense the external source 420 is "off-chip". However, the external source 420 may reside inside the set top box 400 and therefore be considered to be "on-board". The external source 420 may be for example Flash memory. Alternatively, the rules could be provided to the set top box 400 by transmitting the rules to the receiver 112. The rules are encrypted and signed using secure private keys known only to a trusted party, such as the signal provider, before being sent to the set top box. The set top box 400 uses secure public keys to decrypt the rules, check the signature and store them in the rules RAM 416. This allows the rules to be updated in the rules RAM 416. The secure keys used for the signing, encryption and decryption of the rules are preferably not the same keys as those used to encrypt and decrypt content or control data received at the receiver 112. For example the secure key used to decrypt the rules at the set top box may be the Root Key stored in the set top box 400, or another key stored in the set top box 400 which has a high level of security. In this way, the security of the keys used for the encryption and decryption of the rules can be maintained and the rules received at the set top box 400 can be trusted. In this way the set top box can ensure that the rules in the rules RAM 416 are authentic and should be trusted. If the rules need to be changed, in the embodiment in which the rules are loaded from the external source 420, which is an on-board memory, the broadcaster can transmit a signed and encrypted control message to tell the processor 102 of the set top box 400 to write a new set of rules into the external memory as part of a "firmware update". Then when the set top box 400 is rebooted the new rules will be loaded into the rules RAM 416.

In an alternative embodiment, different sets of rules may be stored in the rules ROM 418 at manufacture of the set top box 400. The rules can be loaded into the rules RAM 416 from the rules ROM 418 subsequent to manufacture. A hardware state machine engine 417 could be used to copy the contents of the rules ROM 418 into the rules RAM 416 when the rules RAM 416 is initialized. The rules in the rules ROM 418 can be trusted since they cannot be modified after manufacture. Indeed, loading the rules into the rules RAM 416 from the rules ROM 418 may be considered more secure than loading the rules into the rules RAM 416 from an external source 420 or via a transmission received at receiver 112, even if a secure loading technique is used as described above. Although, the rules in the rules ROM 418 cannot be updated after manufacture, it is possible to store many different sets of rules in the rules ROM 418 at manufacture, whereby different ones of the sets of rules can be chosen to be loaded into the rules RAM 416 for use in the set top box 400 at different times as required. In this way, the set top box 400 can be designed and manufactured to be usable for a plurality of sets of rules. Furthermore, if a set of rules is required for use in the set top box 400 that is not present in the rules ROM 418, the rules ROM 418 could be replaced with a new rules ROM 418 containing the required set of rules. It would be simpler to replace the rules ROM 418 of set top box 400 than to replace the rule enforcer 314 containing the hard-coded rules of the prior art (shown in Figure 3).

Being able to update the rules in the rules RAM 416 allows the set top box 400 to be flexible in the rules that are used. In this way, new security systems can be used by the signal providers, and the set top boxes can be easily modified to adapt to the new security systems which may involve new sets of rules being used. This means that set top boxes do not need to be replaced when new sets of rules are implemented. Furthermore, set top boxes can be manufactured for general purpose, for use with one of a number of different signal providers using different sets of rules. After manufacture the set top box can have appropriate rules loaded into the rules RAM 416 according to a secure loading technique as described above for use with a particular signal provider. This allows the same manufacturing process to be used for set top boxes for use with different signal providers. All of this flexibility is achieved without detriment to the security of the keys due to the secure loading technique used.

When the encrypted information is an encrypted key, the engine 104 requires a source key (such as the Root Key) from the key memory 110 in order to decrypt the encrypted key. The decrypted key is referred to as the "destination key". A request sent from the engine 104 to the rule enforcer 414 includes an identifier of the source key and an identifier of the destination key. The rules in the rules RAM 416 that are relevant to the source key will define whether the source key can be used for decrypting other keys, whether the specific engine 104 running the specific algorithm that generated the request is permitted to use the source key and which destination keys can be decrypted using the source key. If the request complies with the rules in the rules RAM 416 then the source key is supplied to the engine 104 from the key memory 110 and can be used to decrypt the encrypted destination key. Once the encrypted destination key has been decrypted, the decrypted destination key can be written to the key memory. Once again the rule enforcer 414 reads the rules RAM 416 to check that the engine 104 and/or the specific algorithm running on the engine 104 is allowed to write the destination key to the key memory 110.

The key memory preferably comprises a plurality of equally-sized memory sections called "slots". Each slot is the size of one key, such that one slot can store one key. For a digital TV system, the keys may be for example 128 bits, in which case the slots would be 128 bits in the key memory. The keys, and therefore the corresponding slots, may alternatively be other sizes. The key slots are combined together into a number of equally-sized "blocks" in the key memory 110. The number of slots in a block will typically be a power of 2, such as 1, 2, 4, 8 or 16.

Where the key memory 110 has the structure described above, the rules RAM 416 may have a complimentary structure whereby the rules RAM 416 contains one word for each memory block in the key memory 110. The size of the words in the rules RAM 416 may vary according to the specific structure of the rules that are to be stored in the rules RAM 416.

In one implementation, the rules RAM has an "X/Y" structure as shown in Figure 6. In this implementation, each word contains rules pertaining to keys in a corresponding block of the key memory 110, for example Word 0 in the rules RAM 416 contains rules pertaining to the keys in block 0 of the key memory 110. Each word in the rules RAM 416 contains one bit for every block in the key memory 110, the bits in the word having a value (for example, either "0" or "1 ") to signify whether a source key from the block in the key memory corresponding to the word number in the rules RAM 416 can be used to decrypt a destination key corresponding to the bit number of the word in the rules RAM 416. In the example shown in Figure 6, Word 0 contains a "0" in bits 0, 2, 3 and 4 indicating that a key from block 0 in the key memory 110 cannot be used to decrypt a key in block 0, 2, 3 or 4. However, Word 0 contains a "1" in bit 1 indicating that a key from block 0 in the key memory 110 can be used to decrypt a key in block 1. Each word in the rules RAM 416 can also contain other rules relating to aspects of how a request for a source key in a block corresponding to the word number should be handled by the rule enforcer 414. For example the further rules may define whether keys in the block can be used for decrypting other keys, whether keys in the block can be used for decrypting content, and which algorithms and/or engines are allowed access to keys in the block. The other rules may also define whether the keys in the key block may be accessed by initiators in the set top box 400 other than the engines 104 and 106. The other rules may also define whether specific data manipulations need to be performed on a key before it is written to the key memory 110, and may also define whether the keys in the key block should be accessible to the engines in other ways. Other rules may also be included in the words of the rules RAM 416 as would be apparent to a skilled person.

When a request for a source key is received at the rule enforcer 414 from the engine 104, the address of the source key block in the key memory 110 is used to decide which word of the rules RAM 416 to read to determine the rules that should be applied to the request. In particular, where the engine 104 is decrypting a key, the rules RAM 416 is used to determine whether a source-destination key pair is permitted. The rule enforcer 414 uses the address of the source key to index the rules RAM 416 and to read the word corresponding to the relevant source key block in the key memory 110. The implementation of the rules RAM 416 shown in Figure 6 showing the X/Y structure is particularly useful in that for a source key, only one word in the rules RAM 416 must be read in order to obtain the rules relating to that source key. The rule enforcer 414 stores the word of the X/Y table corresponding to the source key block until the engine 104 attempts to write the destination key. When the engine 104 attempts to write the destination key, the rule enforcer 414 uses the address of the destination key in the request to index the bits of the word returned by the rules RAM 416 to decide whether the source-destination pair is permitted. It would be apparent to someone skilled in the art that the X/Y table shown in Figure 6 can be inverted (i.e. the destination key could be used as the word address in the rules RAM 416 and the source key as the index within the returned word, i.e. the bit number). In this inverted case, the rule enforcer 414 would store the block number of the source key until the engine 104 writes the destination key, instead of the X/Y table word. It would also be apparent to someone skilled in the art that the contents of the table may be inverted such that a "1" in the table indicates that the corresponding key block may not be used as a destination key block, and a "0" in the table indicates that the corresponding key block can be used as a destination key block.

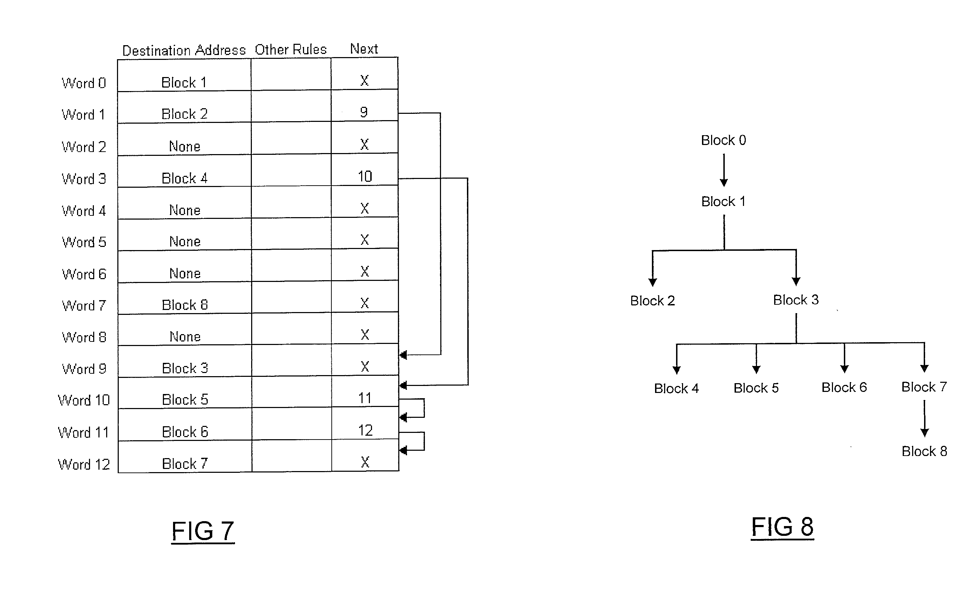

With reference to Figures 7 and 8 there is now described another implementation of the rules RAM 416 in which the rules are stored by way of a linked list. Figure 7 shows an example of a linked list which may be used to describe the key ladder shown in Figure 8. In the example shown in Figures 7 and 8 there are 9 key blocks (Blocks 0 to 8) in the key memory 110. Words 0 to 8 in the rules RAM 416 correspond to the respective key blocks 0 to 8. The destination address field in the rules RAM 416 for a word corresponding to a source key block, gives a key block in the key memory 110 which includes an allowed destination key for a source key from the source key block. For example the destination address field of Word 0 shows "Block 1" which indicates that a key from Block 0 may be used to decrypt a key from Block 1. The "other rules" field in the rules RAM 416 contains other rules as described above relating to the source key. The "Next" field in the rules RAM 416 indicates an address in the rules RAM 416 which contains further rules relating to the source key. For example, the "Next" field of Word 1 indicates that Word 9 of the rules RAM 416 contains a further destination address (Block 3) which may be used with a key from Block 1 as the source key. Words 1 and 9 of the rules RAM 416 shown in Figure 7 define that a key from block 1 can be used to decrypt keys from blocks 2 and 3 in the key memory 110, as illustrated in Figure 8.

In the implementation of Figures 7 and 8, the rule enforcer 414 determines whether a source-destination key pair is permitted by using the address of the source key to index the rules RAM 416 and to read the word corresponding to the source key block. The word returned from the rules RAM 416 contains the address of a destination keyblock, plus the address of a second location in the rules RAM 416 which contains a further permitted destination for the source keyblock. The rule enforcer 414 can then obtain the word in the second location in the rules RAM 416 to obtain the further permitted destination block. The Destination Address field may contain a special value (denoted by "None" in Figure 7) which does not match any of the possible destination addresses, and which means that no destinations are allowed for a particular source key. The "None" indicator would indicate "leaf" blocks in the key ladder (e.g. Blocks 2, 4, 5, 6 and 8 shown in Figure 8. The "Next" field may contain a special value (denoted by "X" in Figure 7) which does not match any of the rules RAM locations, and which terminates the list. It would be apparent to someone skilled in the art that the linked list described with reference to Figure 7 can be inverted (i.e. the destination key could be used as the initial list index, whereby the list would contain the addresses of key blocks of permitted source keys for the particular destination key).

There has been described a method and system for allowing the rules governing access to keys in the key memory 110 to be stored in a rules RAM 416 in such a way that the rules can be updated in a flexible manner, without adversely affecting the security of the keys stored in the key memory 110.

While this invention has been particularly shown and described with reference to preferred embodiments, it will be understood to those skilled in the art that various changes in form and detail may be made without departing from the scope of the invention as defined by the appendant claims.

## Claims

1. A system comprising:
a key memory storing a group of keys for use in decryption;
a programmable memory configured to store a set of rules governing access to the key memory;
a first engine for deriving a first key using a second key from said key group, the engine being configured to transmit a request for access to the second key from the key memory; and
logic connected between the engine and the key memory and further connected to the programmable memory, the logic being configured to receive the request from the engine and to use the set of rules to control the access to the second key in the key memory,
wherein said programmable memory is writeable in situ to replace said set of rules with an alternative set of rules.

2. The system of claim 1 further comprising:
a second engine for receiving encrypted information and for decrypting the encrypted information using a third key from said group, the engine being configured to transmit a request for access to the third key from the key memory, the logic being further configured to receive the request from the engine and to use the set of rules to control the access to the third key in the key memory,

3. The system of either preceding claim further comprising:
a third engine for receiving unencrypted information and for encrypting the unencrypted information using a fourth key from said group, the engine being configured to transmit a request for access to the fourth key from the key memory, the logic being further configured to receive the request from the engine and to use the set of rules to control the access to the fourth key in the key memory.

4. The system of claim 3 wherein at least one of:
the first and second engines are a single engine;
the first and third engines are a single engine;
the second and third engines are a single engine; and
the first, second and third engines are a single engine.

5. The system of any preceding claim wherein the key memory comprises a plurality of key memory sections, each key memory section being configured to store at least one key, and wherein the programmable memory comprises a respective plurality of rule memory sections, each rule memory section being configured to store rules pertaining to the at least one key stored in the respective key memory section.

6. The system of any preceding claim wherein the first engine is further configured to generate a decrypted key from an encrypted key and send the decrypted key to the logic for storage in the key memory, wherein the first key is the decrypted key.

7. The system of claim any preceding claim wherein the logic is further configured to use the set of rules to determine whether and where to store the first key in the key memory.

8. A method for decrypting information comprising:
writing a set of rules into a programmable memory, the set of rules governing access to a key memory;
deriving a first key at a first engine using a second key from said key group;
transmitting a request from the first engine for access to the second key from the key memory;
receiving the request at logic connected between the engine and the key memory, the logic being further connected to the programmable memory; and
using the set of rules at the logic to control the access to the second key in the key memory,
wherein said programmable memory is writeable in situ to replace said set of rules with an alternative set of rules.

9. The method of claim 8 further comprising:
receiving encrypted information at a second engine and for decrypting the encrypted information using a third key from said group;
transmitting a request by the second engine for access to the third key from the key memory; and
receiving the request at logic and using the set of rules to control the access to the third key in the key memory,

10. The method of claim 8 or 9 further comprising:
receiving unencrypted information at a third engine and for encrypting the unencrypted information using a fourth key from said group;
transmitting a request by the third engine for access to the fourth key from the key memory; and
receiving the request at logic and using the set of rules to control the access to the fourth key in the key memory,

11. The method of claim 9 wherein the step of using the set of rules to control access to the second or third key comprises using the set of rules to determine whether to grant access to the second or third key in the key memory in dependence upon the encrypted information and the level of the key in a key hierarchy.

12. The method of claim 11 wherein the first key is an encrypted key and the determination of whether to grant access to the second key further depends upon the level of the first key in the key hierarchy.

13. The method of claim 11 or claim 12 further comprising storing a root key at the top of the key hierarchy, wherein the set of rules dictate that the root key can be used for decrypting other keys but cannot be used for decrypting data.

14. The method of claim 13 wherein the encrypted information is encrypted data and the third key is a data key and the method further comprises using the third key to decrypt the encrypted data, wherein the third key is at a lower level in the key hierarchy than the root key.

15. The method of any of claims 8 to 14 further comprising updating at least one key in the key memory after a time interval which is shorter than an expected time required to calculate the at least one key based on observation of inputs and outputs of a decrypting function that uses the at least one key.
